# EUROPEAN PATENT APPLICATION

(11) **EP 2 642 375 A2**
(43) Date of publication of application: **25.09.2013**
(21) Application number: 13159898.9
(22) Date of filing: 19.03.2013
(51) Int. Cl.: G06F 3/044

(54) **Touch panel**

(30) Priority: 19.03.2012 TW 101109314; 11.01.2013 TW 102101190
(71) Applicant: Wintek (China) Technology Ltd., 523808 Dongguan City Guangdong (CN); Wintek Corporation, 42760 Taichung City (TW)
(72) Inventor: Chung, Yung-Shan, 436 Taichung City (TW); Yu, Peng-Chih, 427 Taichung City (TW); Lin, Su-Ming, 427 Taichung City (TW); Chien, Yu-Feng, 406 Taichung City (TW); Chen, Wei-Chih, 433 Taichung City (TW); Huang, Ping-Wen, 406 Taichung City (TW); Hsu, Yuan-Chieh, 433 Taichung City (TW)
(74) Representative: Becker Kurig Straus

(57) **Abstract**

A touch panel (10) includes a substrate (12), a decoration layer (14), a touch sensing device (20), and at least one first insulation pattern (161). The substrate (12) has a light transmissible region (12A) and a peripheral region (12B). The decoration layer (14) is disposed in the peripheral region (12B). The touch sensing device (20) includes a first patterned transparent sensing layer (21) disposed at least in the light transmissible region (12A). The first patterned transparent sensing layer (21) extends to the peripheral region, partially overlapping the decoration layer (14). The first insulation pattern (161) is disposed in the peripheral region (12B) and located between the first patterned transparent sensing layer (21) and the decoration layer (14), so that the first patterned transparent sensing layer (21) and the decoration layer (14) are not in contact with each other.

## Description

### Field of the Invention

The present invention relates to a touch panel, and more particularly, to the touch panel to avoid short circuit risk according to the pre-characterizing clauses of claims 1 and 10.

### Background of the Invention

Because of the characteristics of human-computer interaction and various design possibilities, touch sensing display panels have been widely applied to the external input interfaces of many electronic products. In recent years, as the applications of electronic products have developed diversely, consumer electronics with the integration of touch sensing functions and display panels are commercialized a lot and have evolved flourishingly, for example, mobile phones, GPS navigator systems, tablet PCs, personal digital assistances (PDA), and laptop PCs. Generally speaking, the substrate of a touch panel has a light transmissible region and a peripheral region. In the light transmissible region, there is at least one transparent sensing electrode disposed so as to provide touch capabilities; in the peripheral region, metal wires, which electrically connect transparent sensing electrodes, are disposed so as to deliver sensing signal. Moreover, in order to ensure the touch capabilities at the edge of the light transmissible region, the transparent sensing electrodes generally extend to the peripheral region, thereby overlapping and contacting the decoration layer, which is used to shield the metal wires.

However, since the adhesion between the decoration layer and the transparent conductive material for fabricating the transparent sensing electrodes is strong, when the transparent conductive material is being etched to form the transparent sensing electrodes, the transparent conductive material often remains on the decoration layer instead of being completely etched. It may lead to a short circuit and disable the touch capabilities of the touch panel.

### Summary of the Invention

This in mind, the present invention aims at providing a touch panel so as to reduce short circuit risk.

This is achieved by a touch panel according to the pre-characterizing clauses of claims 1 and 10. The dependent claims pertain to corresponding further developments and improvements.

As will be seen more clearly from the detailed description following below, a touch panel is provided. The touch panel includes a substrate, a decoration layer, a touch sensing device and at least one first insulation pattern. The substrate has a light transmissible region and a peripheral region. The decoration layer is disposed in the peripheral region of the substrate. The touch sensing device includes a first patterned transparent sensing layer. The first patterned transparent sensing layer is at least disposed in the light transmissible region of the substrate, and the first patterned transparent sensing layer extends to the peripheral region and overlaps a portion of the decoration layer. The first insulation pattern is disposed in the peripheral region of the substrate and interposed between the first patterned transparent sensing layer and the decoration layer, thereby making the first patterned sensing layer not contact the decoration layer.

### Brief Description of the Drawings

In the following, the invention is further illustrated by way of example, taking reference to the accompanying drawings. Thereof
FIG. 1 is the schematic diagram illustrating a top view of the touch panel according to the embodiment of the present invention,
FIG. 2 is a cross-sectional view diagram taken along a cross-sectional line A-A' in FIG. 1,
FIG. 3 is a cross-sectional view diagram taken along a cross-sectional line B-B' in FIG. 1,
FIG. 4 is a schematic diagram illustrating a touch panel according to a variant of the first embodiment of the present invention,
FIG. 5 is a schematic diagram illustrating a top view of the touch panel according to this embodiment,
FIG. 6 is a cross-sectional view diagram taken along a cross-sectional line C-C' in FIG. 5,
FIG. 7 is a schematic diagram illustrating a top view of the touch panel according to this embodiment,
FIG. 8 is a cross-sectional view diagram taken along a cross-sectional line D-D' in FIG. 7,
FIG. 9 is a schematic diagram illustrating a top view of the touch panel according to the embodiment of the present invention,
FIG. 10 is a cross-sectional view diagram taken along a cross-sectional line E-E' in FIG. 9,
FIG. 11 is a cross-sectional view diagram taken along a cross-sectional line F-F' in FIG. 9,
FIG. 12 is a schematic diagram illustrating a touch panel according to a variant of the third embodiment of this present invention,
FIG. 13 is a flow schematic diagram illustrating a method of fabricating the touch panel according to the fourth embodiment of this invention,
FIG. 14 is a schematic diagram illustrating a top view of the touch panel according to the embodiment of the present invention,
FIG. 15 is a cross-sectional view diagram taken along a cross-sectional line G-G' in FIG. 14,
FIG. 16 is a cross-sectional view diagram taken along a cross-sectional line H-H' in FIG. 14,
FIG. 17 is a schematic diagram illustrating a touch panel according to a first variant of the fourth embodiment of the present invention,
FIG. 18 is a schematic diagram illustrating a touch panel according to a second variant of the fourth embodiment of the present invention,
FIG. 19 is a schematic diagram illustrating a touch panel according to a third variant of the fourth embodiment of the present invention,
FIG. 20 is a schematic diagram illustrating a top view of the touch panel according to the fifth embodiment of the present invention, and
FIG. 21 is a schematic diagram illustrating a touch display panel according to an embodiment of the present invention.

### Detailed Description

To provide a better understanding of the present invention, features of the embodiments will be explained in detail. The embodiments of the present invention are illustrated in the accompanying drawings with numbered elements. In addition, the terms such as "first" and "second" described in the present invention are used to distinguish different components or processes, which do not limit the sequence of the components or processes.

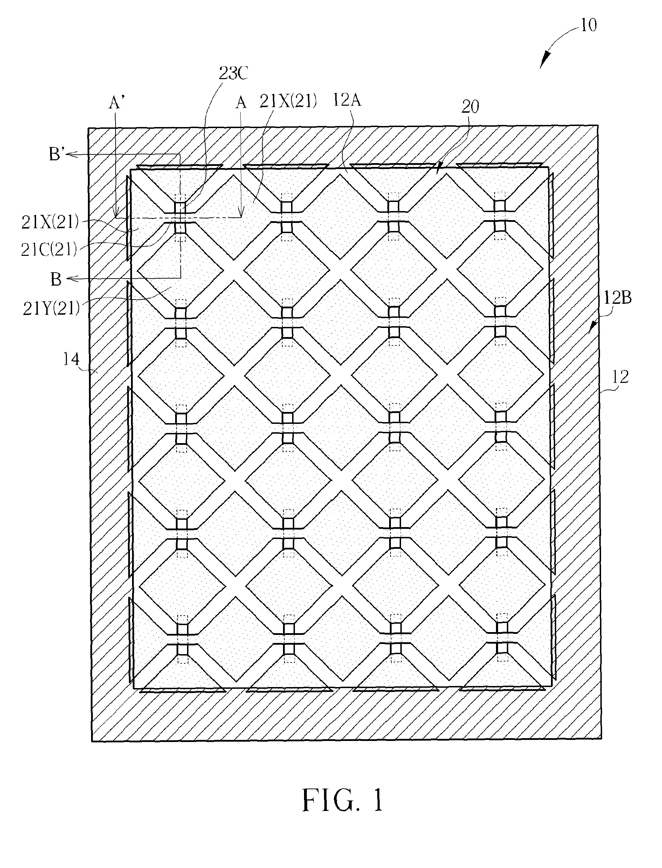

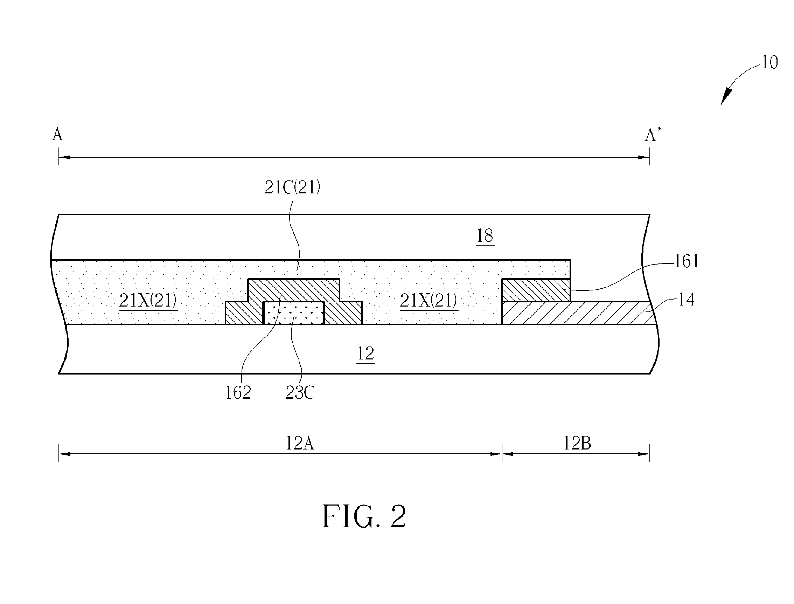

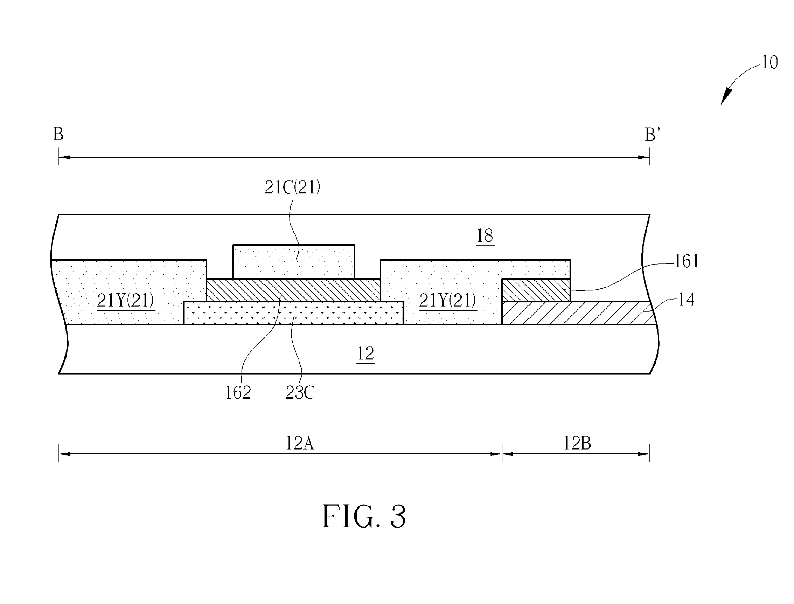

Please refer to FIGs. 1-3. FIGs. 1-3 are schematic diagrams illustrating a touch panel according to the first embodiment of this present invention. FIG. 1 is the schematic diagram illustrating a top view of the touch panel according to the embodiment of the present invention. FIG. 2 is a cross-sectional view diagram taken along a cross-sectional line A-A' in FIG. 1. FIG. 3 is a cross-sectional view diagram taken along a cross-sectional line B-B' in FIG. 1. As shown in FiGs. 1-3, the touch panel 10 of this embodiment includes a substrate 12, a decoration layer 14, a touch sensing device 20, and at least one first insulation pattern 161. The substrate 12 may be a hard transparent substrate, such as a glass substrate, or a flexible transparent substrate, such as a plastic substrate, but not limited thereto. The substrate 12 has a light transmissible region 12A and a peripheral region 12B, which surrounds the light transmissible region 12A. The decoration layer 14 is disposed in the peripheral region 12B of the substrate 12. The material of the decoration layer 14 may include at least one of photoresist (such as black photoresist), ceramic, diamond-like carbon, ink or organic materials, but not limited thereto. The touch sensing device 20 is at least disposed in the light transmissible region 12A of the substrate 12 so as to ensure touch capabilities. The touch sensing device 20 may include a first patterned sensing layer, for example but not limited to, a first patterned transparent sensing layer 21. The first patterned transparent sensing layer 21 is disposed in the light transmissible region 12A of the substrate 12, extends to the peripheral region 12B and overlaps a portion of the decoration layer 14; therefore, the touch capabilities in the interface of the light transmissible region 12A and the peripheral region 12B are ensured and the touch capabilities in a portion of the peripheral region 12B are improved. The first insulation patterns 161 (as shown in FIG. 2) are disposed in the peripheral region 12B of the substrate 12 and interposed between the first patterned transparent sensing layer 21 and the decoration layer 14. The first patterned transparent sensing layer 21 does not contact the decoration layer 14. Moreover, a protective layer 18 may be further disposed on the substrate 12 (as shown in FIG. 2) and cover the first patterned transparent sensing layer 21 and a portion of the decoration layer 14. The material of the protective layer 18 may be an inorganic protective layer, such as silica, or an organic protective layer. Moreover, a wire (not shown), which electrically connects the first patterned transparent sensing layer 21, may be disposed in the peripheral region 12B of the substrate 12 so as to deliver touch signals, which are detected in the first patterned transparent sensing layer 21, to a sensing chip (not shown). The decoration layer 14, the first insulation patterns 161, and the first patterned transparent sensing layer 21 may be disposed on the same surface of the substrate 12, but not limited thereto. The first patterned transparent sensing layer 21 is a transparent conductive layer, which may be formed of indium zinc oxide or indium tin oxide, but not limited thereto. The material of the first insulation patterns 161 may be organic insulation materials or inorganic insulation materials, but not limited thereto. Moreover, the first insulation patterns 161 may be single-layered insulation patterns or composite-layered insulation patterns.

The first insulation patterns 161 in the present invention are disposed in the peripheral region 12B on the substrate 12 and interposed between the first patterned transparent sensing layer 21 and the decoration layer 14 so as to prevent the first patterned transparent sensing layer 21 from contacting the decoration layer 14. Accordingly, no transparent conductive material remains after the transparent conductive material has been etched to form the first patterned transparent sensing layer 21; therefore, the risk of short circuit is reduced.

As shown in FIGs. 1-3, in this embodiment, the first patterned transparent sensing layer 21 includes a plurality of first transparent sensing electrodes 21X and a plurality of first transparent connection lines 21C, which are disposed in the light transmissible region 12A of the substrate 12 along a direction, for example, the x-axis direction. The first patterned transparent sensing layer 21 also includes a plurality of second transparent sensing electrodes 21Y, which are disposed in the light transmissible region 12A of the substrate 12 along another direction, for example, the y-axis direction. Each of the first transparent sensing electrodes 21X and each of the second transparent sensing electrodes 21Y may include, for example, a diamond electrode, but it is not limited to this and may be, for example, a triangular electrode, a rectangular electrode, a linear electrode or other electrodes of various shapes, respectively. Any two of the first transparent sensing electrodes 21X adjacent to each other are connected by the first transparent connection line 21C, and at least one of the first transparent sensing electrodes 21X partially overlaps the decoration layer 14. The first insulation patterns 161 are disposed between the first transparent sensing electrodes 21X and the decoration layer 14. The touch sensing device 20 further includes a plurality of second insulation patterns 162 and a plurality of second connection lines 23C. Any two of the second transparent sensing electrodes 21Y adjacent to each other are connected by the second connection line 23C corresponding to the two of the second transparent sensing electrodes 21Y, and at least one of the second transparent sensing electrodes 21Y partially overlaps the decoration layer 14. The first insulation patterns 161 are disposed between the second transparent sensing electrodes 21Y and the decoration layer 14. Each of the second insulation patterns 162 is disposed between the first transparent connection line 21C and the second connection line 23C corresponding to the first transparent connection line 21C, respectively. In this embodiment, the touch sensing device 20 is a single-layered transparent electrode structure. In other words, the first transparent sensing electrodes 21X, the first transparent connection lines 21C, and the second transparent sensing electrodes 21Y are formed of the first patterned transparent sensing layer 21; moreover, the second connection lines 23C, which connect any of the second transparent sensing electrodes 21Y adjacent to each other, are formed of another conductive layer. The second connection lines 23C may be a metal connection line or a transparent connection line. Furthermore, in this embodiment, each of the second insulation patterns 162 is disposed on the second connection line 23C corresponding to the second insulation pattern 162, and the first patterned transparent sensing layer 21 is disposed on the second insulation patterns 162. The second insulation patterns 162 and the first insulation patterns 161 may be formed of the same patterned insulation layer and fabricated by the same patterning process.

Touch panels are not restricted to the preceding embodiments in the present invention. Other embodiments or modifications will be detailed in the following description. In order to simplify and show the difference between the other embodiments or modifications and the above-mentioned embodiment, the same numerals denote the same components in the following description, and the same parts are not detailed redundantly.

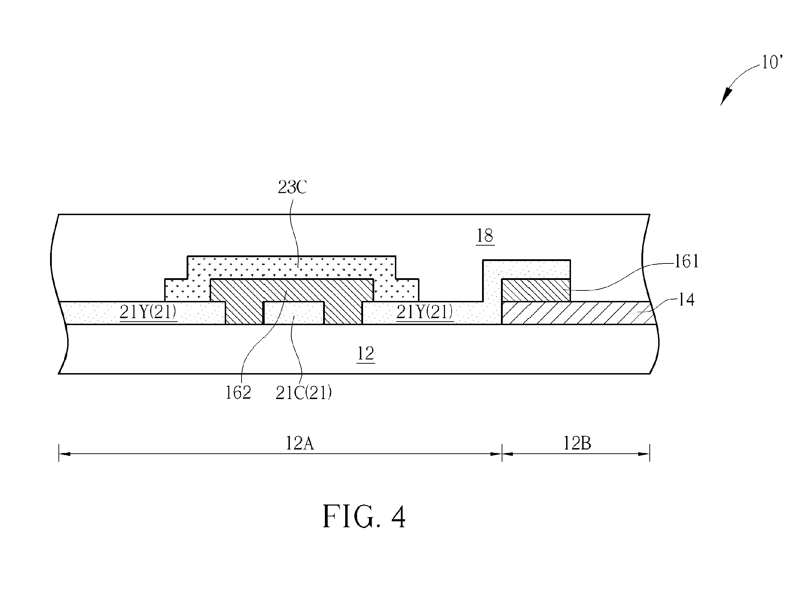

Please refer to FIG. 4. FIG. 4 is a schematic diagram illustrating a touch panel according to the variant embodiment of the first embodiment of the present invention. As shown in FIG. 4, in this variant embodiment, the second insulation patterns 162 of the touch panel 10' is disposed on the first patterned transparent sensing layer 21, and each of the second connection lines 23C is disposed on the second insulation pattern 162 corresponding to the second connection line 23C. The first insulation patterns 161 are disposed in the peripheral region 12B on the substrate 12 and interposed between the first patterned transparent sensing layer 21 and the decoration layer 14; the second insulation patterns 162 are disposed between the first patterned transparent sensing layer 21 and the second connection lines 23C. The second insulation patterns 162 and the first insulation patterns 161 are formed of different patterned insulation layers.

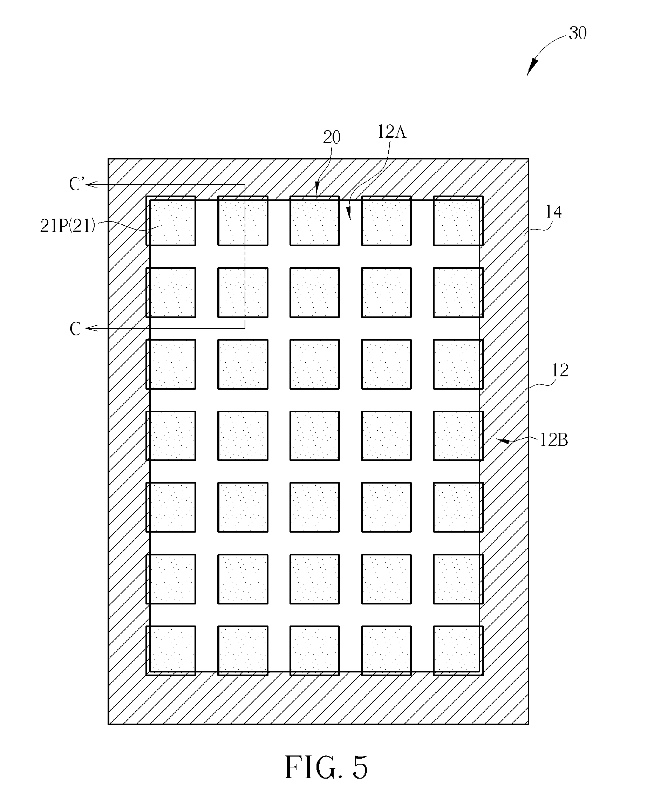

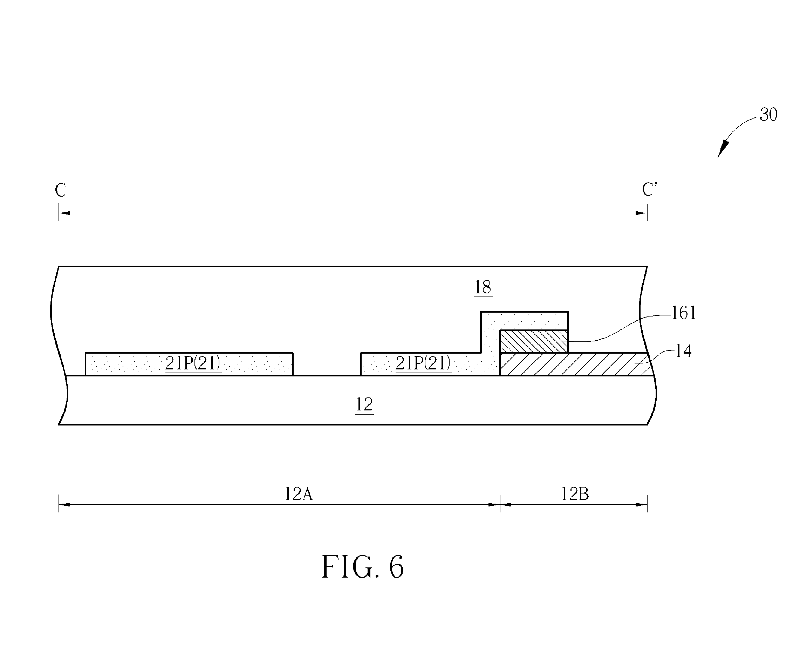

Please refer to FIGs. 5-6. FIGs. 5-6 are schematic diagrams illustrating a touch panel according to the second embodiment of the present invention. FIG. 5 is a schematic diagram illustrating a top view of the touch panel according to this embodiment. FIG. 6 is a cross-sectional view diagram taken along a cross-sectional line C-C' in FIG. 5. As shown in FIGs. 5-6, in this embodiment, the first patterned transparent sensing layer 21 of the touch panel 30 includes a plurality of transparent sensing electrodes 21 P. The transparent sensing electrodes 21 P are electrically isolated. The transparent sensing electrodes 21 P which locate in the light transmissible region 12A extend to the peripheral region 12B and overlap the decoration layer 14. The first insulation patterns 161 are disposed in the peripheral region 12B on the substrate 12 and interposed between the transparent sensing electrodes 21 P and the decoration layer 14. The transparent sensing electrodes 21 P do not contact the decoration layer 14. In this embodiment, the transparent sensing electrodes 21 P are rectangular electrodes.

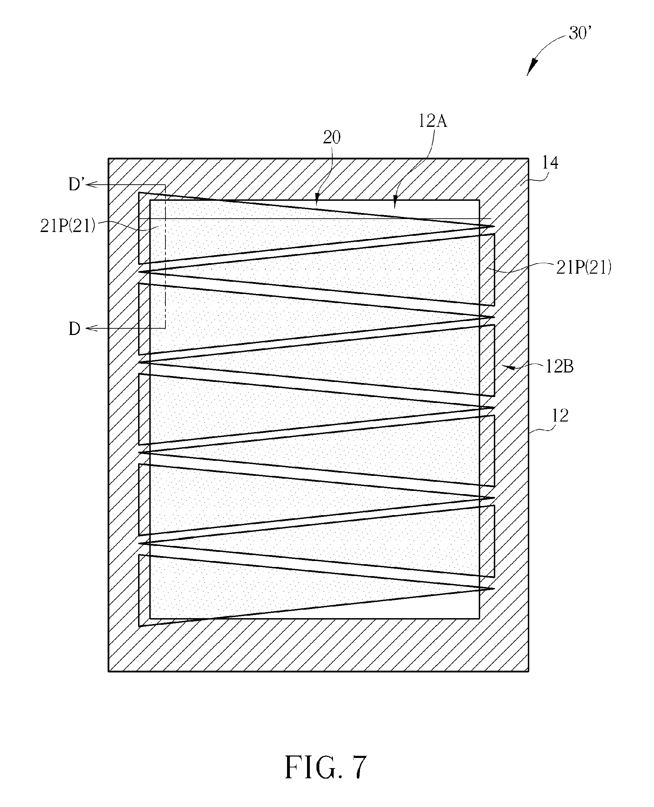

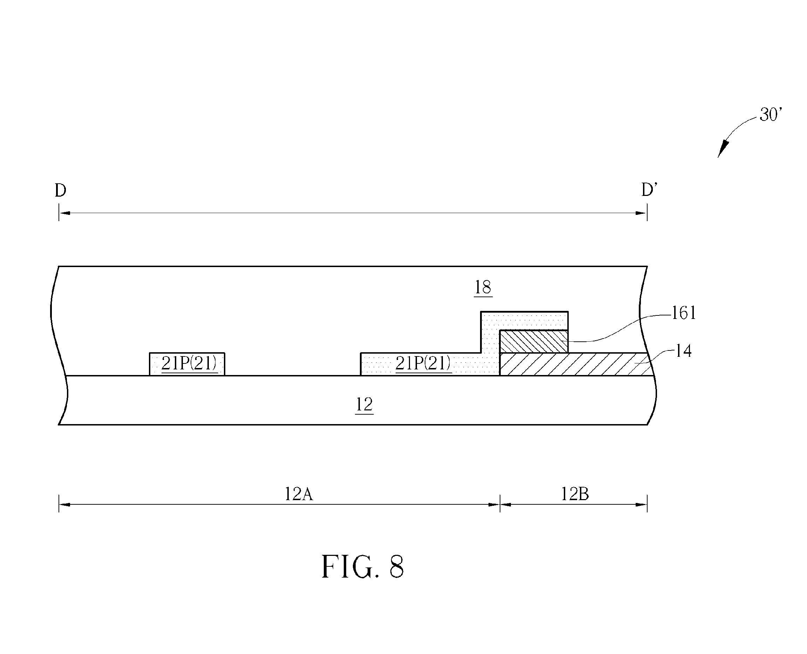

Please refer to FIGs. 7-8. FIGs. 7-8 are schematic diagrams illustrating a touch panel according to the variant embodiment of the second embodiment of the present invention. FIG. 7 is a schematic diagram illustrating a top view of the touch panel according to this embodiment. FIG. 8 is a cross-sectional view diagram taken along a cross-sectional line D-D' in FIG. 7. As shown in FIGs. 7-8, in the variant embodiment, the first patterned transparent sensing layer 21 of the touch panel 30' includes a plurality of transparent sensing electrodes 21 P. The transparent sensing electrodes 21 P adjacent to each other are electrically isolated. The transparent sensing electrodes 21 P which locate in the light transmissible region 12A extend to the peripheral region 12B and partially overlap the decoration layer 14. The first insulation patterns 161 are disposed in the peripheral region 12B on the substrate 12 and interposed between the transparent sensing electrodes 21 P and the decoration layer 14. The transparent sensing electrodes 21 P do not contact the decoration layer 14. The difference between the second embodiment and its variant embodiment is that the transparent sensing electrodes 21 P are triangular electrodes in this embodiment.

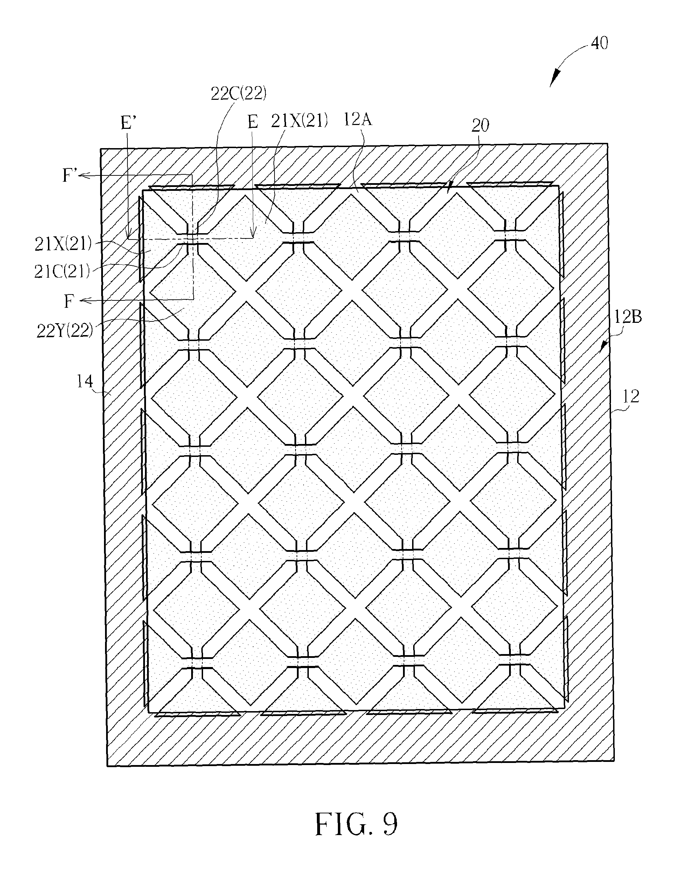

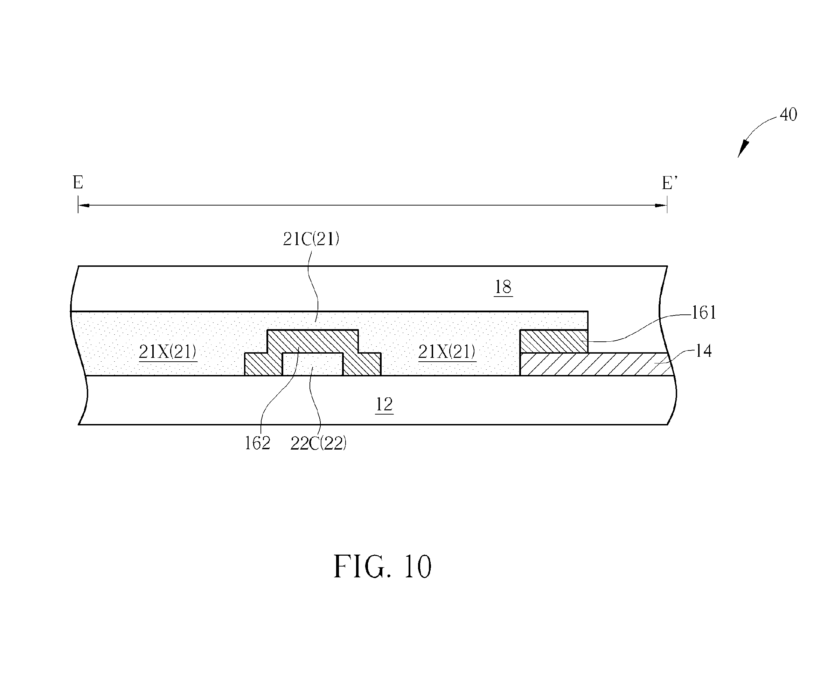

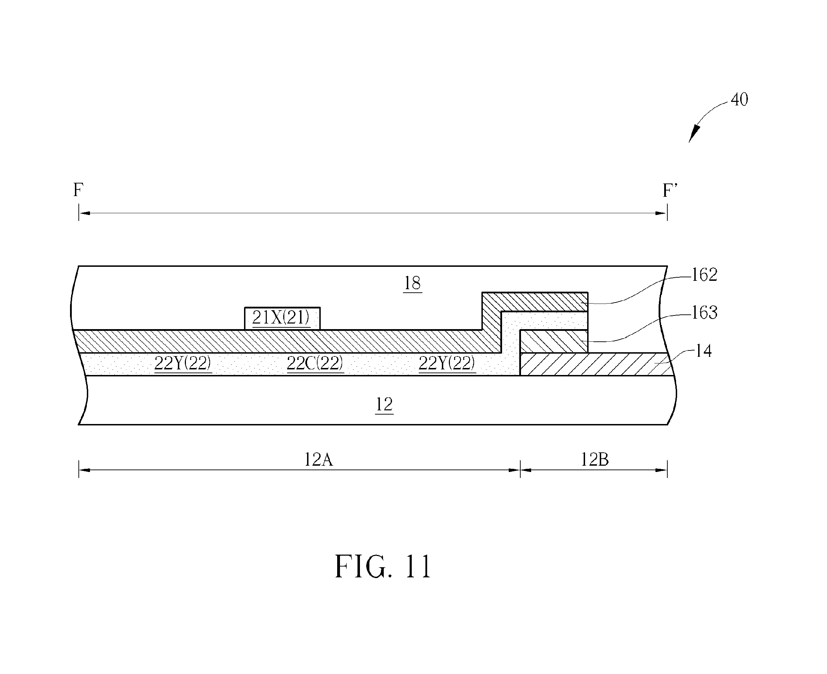

Please refer to FIGs. 9-11. FIGs. 9-11 are schematic diagrams illustrating a touch panel according to the third embodiment of this present invention. FIG. 9 is a schematic diagram illustrating a top view of the touch panel according to the embodiment of the present invention. FIG. 10 is a cross-sectional view diagram taken along a cross-sectional line E-E' in FIG. 9. FIG. 11 is a cross-sectional view diagram taken along a cross-sectional line F-F' in FIG. 9. As shown in FIGs. 9-11, in the touch panel 40 of this embodiment, the touch sensing device 20 is a double-layered transparent electrode structure. Therefore, the touch sensing device 20 includes a first patterned transparent sensing layer 21 and a second patterned transparent layer 22. The first patterned transparent sensing layer 21 includes a plurality of first transparent sensing electrodes 21X and a plurality of first transparent connection lines 21C; any two of the first transparent sensing electrodes 21X adjacent to each other are connected by the first transparent connection line 21C. Moreover, at least one of the first transparent sensing electrodes 21X partially overlaps the decoration layer 14, and the first insulation patterns 161 are disposed between the first transparent sensing electrodes 21X and the decoration layer 14. The second patterned transparent layer 22 includes a plurality of second transparent sensing electrodes 22Y and a plurality of second transparent connection lines 22C; any two of the second transparent sensing electrodes 22Y adjacent to each other are connected by the second transparent connection line 22C. In this embodiment, the first patterned transparent sensing layer 21 and the second patterned transparent layer 22 are disposed on the same surface of the substrate 12; the first patterned transparent sensing layer 21 is disposed on the second patterned transparent layer 22. Furthermore, the touch sensing device 20 further comprises a second insulation pattern 162, disposed in the light transmissible region 12A and interposed between the first patterned transparent sensing layer 21 and the second patterned transparent layer 22. Moreover, the second insulation pattern 162 is disposed and corresponds to the transparent conductive material which has been etched. The first insulation patterns 161 are disposed between the first transparent sensing electrodes 21X and the decoration layer 14. The second insulation patterns 162 and the first insulation patterns 161 are formed of the same insulation layer. At least one of the second transparent sensing electrodes 22Y partially overlaps the decoration layer 14. The touch panel 40 further comprises at least one third insulation pattern 163 disposed in the peripheral region 12B and interposed between the second transparent sensing electrodes 22Y and the decoration layer 14.

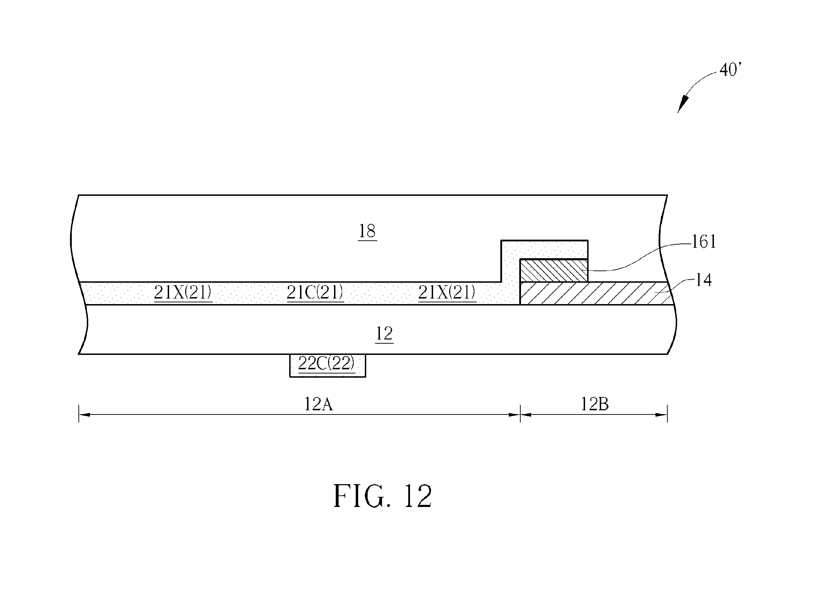

Please refer to FIG. 12. FIG. 12 is a schematic diagram illustrating a touch panel according to the variant embodiment of the third embodiment of this present invention. As shown in FIG. 12, in the variant embodiment of this embodiment, the first patterned transparent sensing layer 21 and the second patterned transparent layer 22 of the touch panel 40 are disposed on the different surfaces of the substrate 12; the first patterned transparent sensing layer 21 and the decoration layer 14 are disposed on the same surface of the substrate 12. The first insulation patterns 161 are disposed between the first transparent sensing electrodes 21X and the decoration layer 14.

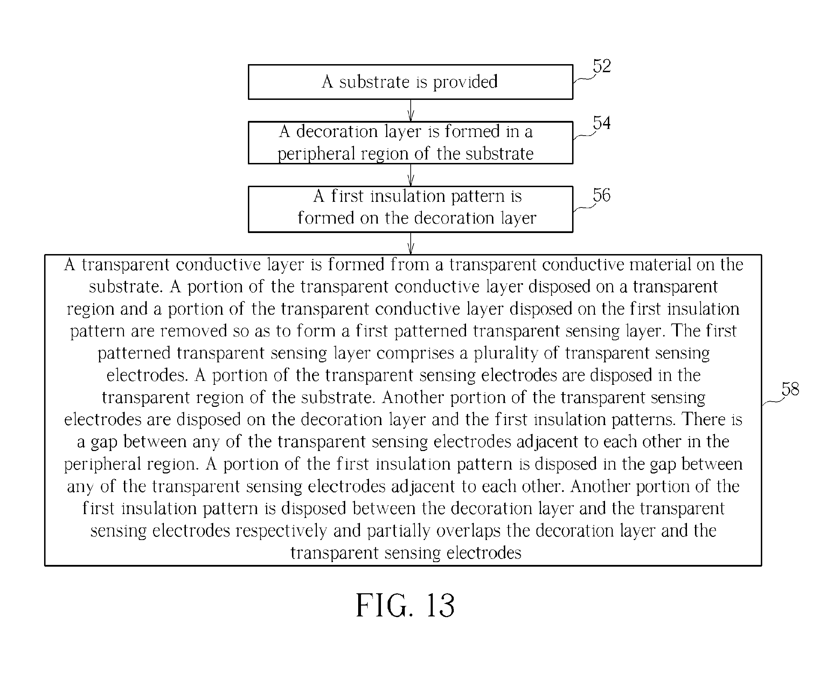

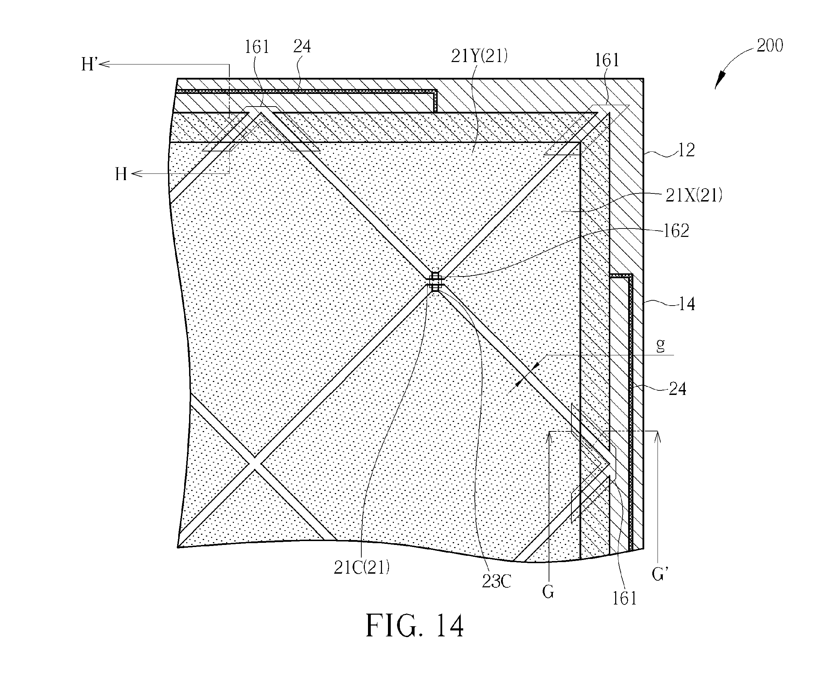

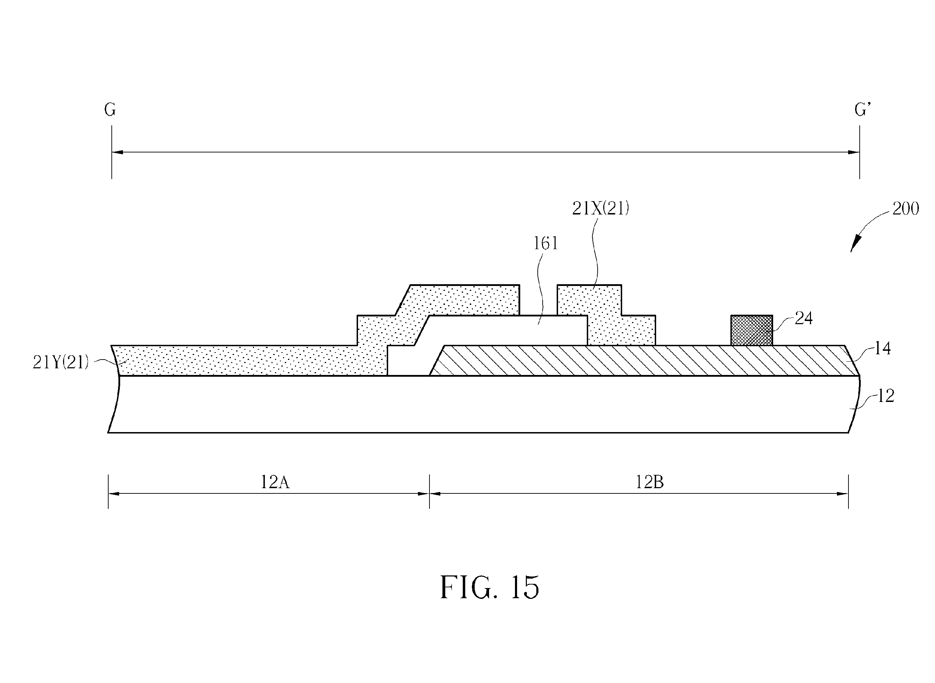

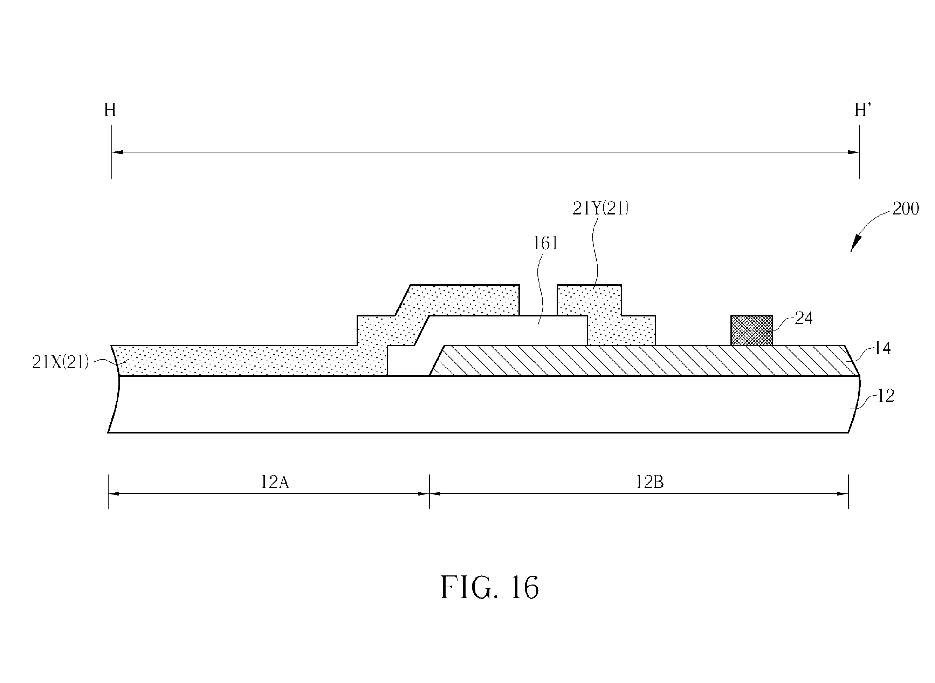

Please refer to FIGs. 13-16. FIG. 13 is a flow schematic diagram illustrating a method of fabricating the touch panel according to the fourth embodiment of this invention. FIGs. 14-16 are schematic diagrams illustrating the method of fabricating the touch panel according to the fourth embodiment of this present invention. FIG. 14 is a schematic diagram illustrating a top view of the touch panel according to the embodiment of the present invention. FIG. 15 is a cross-sectional view diagram taken along a cross-sectional line G-G' in FIG. 14. FIG. 16 is a cross-sectional view diagram taken along a cross-sectional line H-H' in FIG. 14. As shown in FIGs. 13-16, a substrate 12 is provided first, and the substrate 12 has a light transmissible region 12A and a peripheral region 12B. Then, a decoration layer 14 is formed in the peripheral region 12B of the substrate 12. In this embodiment, the material of the decoration layer 14 may include at least one of photoresist (such as black photoresist), ceramic, diamond-like carbon, ink or organic materials, but not limited thereto. Then, at least one first insulation pattern 161 is formed on the decoration layer 14. The material of the first insulation patterns 161 may be organic insulation materials or inorganic insulation materials, but not limited thereto. Moreover, the first insulation patterns 161 may be single-layered insulation patterns or composite-layered insulation patterns. Then, a transparent conductive layer is formed on the substrate 12. A portion of the transparent conductive layer disposed on the light transmissible region 12A and a portion of the transparent conductive layer disposed on the first insulation patterns 161 are removed so as to form a first patterned transparent sensing layer 21. Accordingly, the touch panel 200 of this embodiment is completely fabricated. In this embodiment, the first patterned transparent sensing layer 21 includes a plurality of transparent sensing electrodes and a plurality of first transparent connection lines 21C. The transparent sensing electrodes include a plurality of first transparent sensing electrodes 21X and a plurality of second transparent sensing electrodes 21Y. Any two of the first transparent sensing electrodes 21X adjacent to each other are connected by the first transparent connection line 21C. A portion of the transparent sensing electrodes are disposed in the light transmissible region 12A of the substrate 12, and another portion of the transparent sensing electrodes is disposed on the decoration layer 14 and the first insulation patterns 161. There are gaps in the peripheral region 12B and each of the gaps exits between two adjacent transparent sensing electrodes. A gap given for illustration is as follows, there is a gap g between the first transparent sensing electrode 21X and the second transparent sensing electrode 21Y adjacent to the first transparent sensing electrode 21X. A portion of the first insulation pattern 161 is disposed in the gap g and another portion of the first insulation pattern 161 is disposed between the decoration layer 14 and the transparent sensing electrodes respectively and partially overlaps the decoration layer 14 and the transparent sensing electrodes. The method in this embodiment further includes forming a plurality of second insulation patterns 162, a plurality of metal wires 24 and a plurality of second connection lines 23C on the substrate 12, before the first patterned transparent sensing layer 21 is formed. Any two of the second transparent sensing electrodes 21Y adjacent to each other are connected by the second connection line 23C. Each of the second insulation patterns 162 is disposed between the first transparent connection line 21C and the second connection line 23C corresponding to the first transparent connection line 21C respectively. The metal wires 24 are disposed in the peripheral region 12B on the decoration layer 14 and electrically connect the corresponding first transparent sensing electrodes 21X and the corresponding second transparent sensing electrodes 21Y respectively. The second connection lines 23C may include a metal connection line or a transparent connection line. The second insulation patterns 162 and the first insulation patterns 161 may be formed of the same insulation materials and fabricated by the same patterning process, but not limited thereto. In this embodiment, the second insulation patterns 162 are disposed on the second connection lines 23C, and the first transparent connection lines 21C are disposed on the second insulation patterns 162, but not limited thereto. In a variant embodiment, the second insulation patterns 162 may be disposed on the first transparent connection lines 21C, and the second connection lines 23C may be disposed on the second insulation patterns 162. Accordingly, a portion of each of the first insulation patterns 161 is disposed in one of the gaps g, and another portion of each of the first insulation patterns 161, which is disposed between the decoration layer 14 and the transparent sensing electrodes respectively, at least partially overlaps the decoration layer 14 and the transparent sensing electrodes respectively. Furthermore, when the first patterned transparent sensing layer 21 is being etched, none of the transparent conductive material remains even if the adhesion between the decoration layer 14 and the transparent conductive material is strong, which effectively prevents short circuit risk. Moreover, the first insulation patterns 161 may further cover the sidewall of the decoration layer 14, and thus the first insulation patterns 161 serve as planar layers and promote the flatness of the sidewall of the decoration layer 14. For example, the included angle between the front edge of the first insulation pattern 161 and the surface in the light transmissible region 12A of the substrate 12 is between about 5 and about 20 degrees. By covering the sidewall of the decoration layer 14 with the first insulation patterns 161, the open circuit risk caused by the manufacture process of forming the first patterned transparent sensing layer 21 may be reduced and the yield rate is enhanced, even though the sidewall of the decoration layer 14 is extremely steep.

In this embodiment, the first transparent sensing electrodes 21X, the second transparent sensing electrodes 21Y and the first transparent connection line 21C may all be formed of the first patterned transparent sensing layer 21, but not limited thereto. For example, as shown in FIG. 9, the first transparent sensing electrodes 21X and the first transparent connection lines 21C may be formed of the first patterned transparent sensing layer 21, and the second transparent sensing electrodes 21Y and the second connection lines 23C may be formed of the second patterned transparent layer 22. Moreover, in this embodiment, the first insulation patterns 161 include a plurality of the first insulation patterns 161, which do not mutually connect to each other. A portion of each the first insulation patterns 161 is disposed in the gap g between the first transparent sensing electrode 21X and the second transparent sensing electrode 21Y adjacent to each other, and another potion of each of the first insulation patterns 161 at least partially overlaps the decoration layer 14, the first transparent sensing electrodes 21X and the second transparent sensing electrodes 21Y respectively, but not limited thereto.

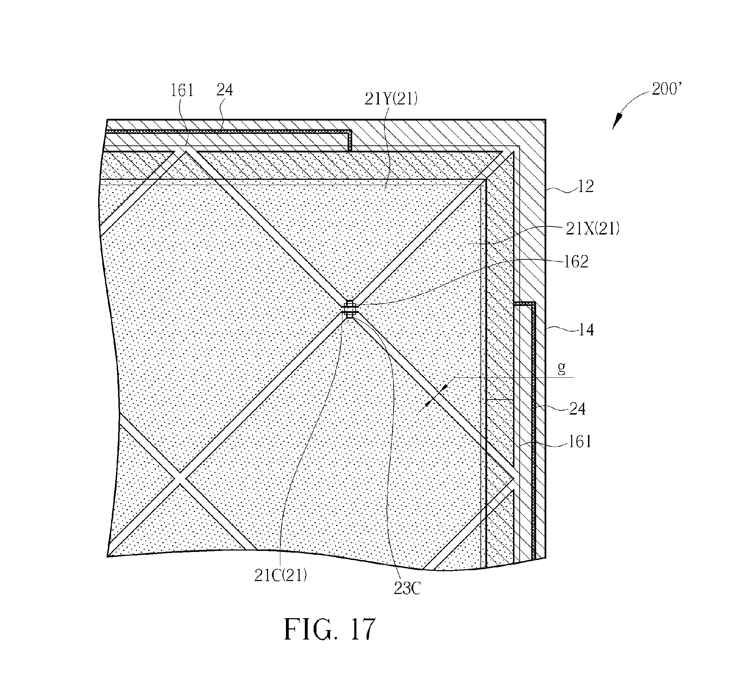

Please refer to FIG. 17. FIG. 17 is a schematic diagram illustrating a touch panel according to a first variant embodiment of the fourth embodiment of the present invention. As shown in FIG. 17, the difference between the fourth embodiment and its variant embodiment is that the first insulation pattern 161 is a ringlike insulation pattern and substantially surrounds the light transmissible region 12A in the touch panel 200' of the first variant embodiment. A portion of the first insulation pattern 161 is disposed in the gaps g between the first transparent sensing electrodes 21X and the second transparent sensing electrodes 21Y adjacent to each other, and another potion of the first insulation pattern 161 partially overlaps the decoration layer 14, the first transparent sensing electrodes 21X and the second transparent sensing electrodes 21Y respectively.

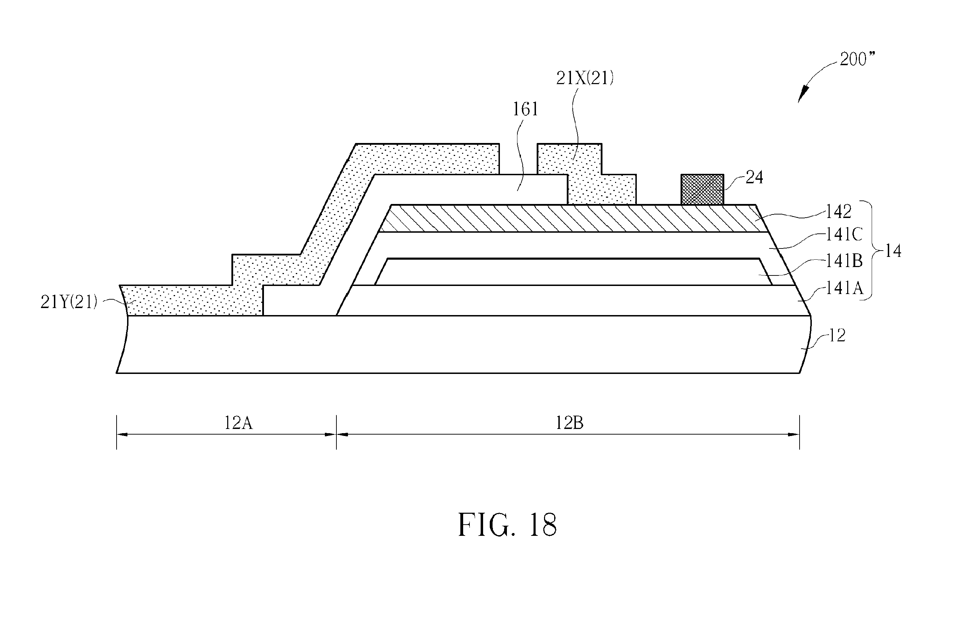

Please refer to FIG. 18. FIG. 18 is a schematic diagram illustrating a touch panel according to a second variant embodiment of the fourth embodiment of the present invention. As shown in FIG. 18, the difference between the fourth embodiment and its variant embodiment is that the decoration layer 14 includes at least one first color decoration layer and a second color decoration layer 142 disposed on the first color decoration layer in the touch panel 200" of the second variant embodiment. For example, the decoration layer 14 in this embodiment includes three layers of the first color decoration layers 141A, 141B, 141C and one layer of the second color decoration layer 142. The first color decoration layer 141C covers the first color decoration layer 141B. In this embodiment, the material of the first color decoration layers 141A, 141B and 141C may include ink, such as white ink, but it is not limited to this and may be ink of other colors. The material of the second color decoration layer 142 may include photoresist, such as black photoresist, but it is not limited to this and may be at least one of ceramic, diamond-like carbon, ink or organic materials.

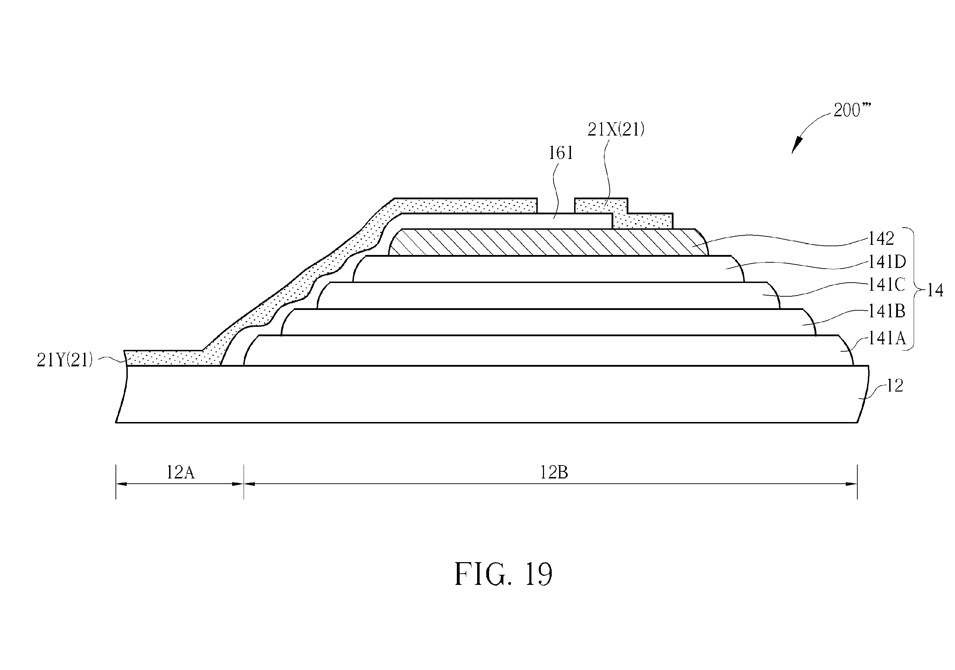

Please refer to FIG. 19. FIG. 19 is a schematic diagram illustrating a touch panel according to a third variant embodiment of the fourth embodiment of the present invention. As shown in FIG. 19, the difference between the fourth embodiment and its variant embodiment is that the decoration layer 14 includes at least one first color decoration layer and a second color decoration layer 142 disposed on the first color decoration layer in the touch panel 200"' of the third variant embodiment. For example, the decoration layer 14 in this embodiment includes four layers of the first color decoration layers 141A, 141B, 141C, 141D and one layer of the second color decoration layer 142. In this embodiment, the material of the first color decoration layer 141A, 141B, 141C and141D may include ink, such as white ink, but it is not limited to this and may be ink of other colors. The material of the second color decoration layer 142 may include photoresist, such as black photoresist, but it is not limited to this and may be at least one of ceramic, diamond-like carbon, ink or organic materials. In this embodiment, the first color decoration layers 141A, 141B, 141C and141D are stacked in that order upward from the surface of the substrate 12. The second color decoration layer 142 is disposed on the first color decoration layer 141D. Moreover, the dimensions of the first color decoration layers 141A, 141B, 141C and141D are in descending order - that is to say, the edge of the first color decoration layer 141B deflects from the edge of the first color decoration layer 141A inward, the edge of the first color decoration layer 141C deflects from the edge of the first color decoration layer 141B inward, and the edge of the first color decoration layer 141D deflects from the edge of the first color decoration layer 141C inward. Therefore, the edge of any two of the first color decoration layers adjacent to each other form a stair structure. The stair structure of the decoration layer 14 has a smoother sidewall. Moreover, the first insulation patterns 161 may further cover the sidewall of the stair structure of the decoration layer 14, and thus the first insulation patterns 161 serve as planar layers and promote the flatness of the sidewall of the decoration layer 14. For example, the included angle between the front edge of the first insulation pattern 161 and the surface in the light transmissible region 12A of the substrate 12 is between about 5 and about 20 degrees. By using the stair structure of the decoration layer 14 and covering the sidewall of the stair structure of the decoration layer 14 with the first insulation patterns 161, the open circuit risk caused by the manufacture process of forming the first patterned transparent sensing layer 21 may be reduced and the yield rate is enhanced, even though the sidewall of the decoration layer 14 is extremely steep.

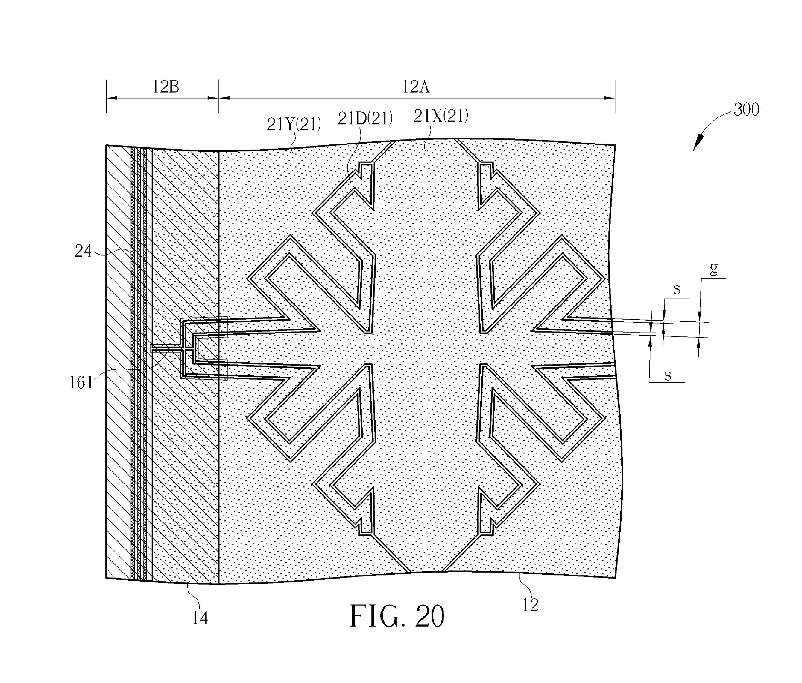

The pattern of the transparent sensing electrodes in this embodiment is not limited to the illustration in FIG. 14. For example, the pattern of the transparent sensing electrodes may be the pattern illustrated in FIG. 5 and FIG. 7, or other appropriate patterns. Please refer to FIG. 20. FIG. 20 is a schematic diagram illustrating a top view of the touch panel according to the fifth embodiment of the present invention. As shown in FIG. 20, the difference between previous embodiments and the fifth embodiment is that the first patterned transparent sensing layer 21 further includes a plurality of dummy electrodes 21D in the touch panel 300 of the fifth embodiment. The dummy electrodes 21D are disposed in the gap g between the first transparent sensing electrodes 21X and the second transparent sensing electrodes 21Y adjacent to each other. The dummy electrodes 21D do not electrically connect the first transparent sensing electrodes 21X and the second transparent sensing electrodes 21Y The dummy electrodes 21D are disposed in the light transmissible region 12A and may partially extend to the peripheral region 12B on the first insulation pattern 161. Because the first transparent sensing electrodes 21X, the second transparent sensing electrodes 21Y and the dummy electrodes 21D are all formed of the first patterned transparent sensing layer 21, and because the gaps s between the dummy electrodes 21D and the first transparent sensing electrodes 21X and the gaps s between the dummy electrodes 21D and the second transparent sensing electrodes 21Y are smaller than the gaps g between the first transparent sensing electrodes 21X and the second transparent sensing electrodes 21Y, the first insulation pattern 161 in the peripheral region 12B is preferably disposed in the gaps g between the first transparent sensing electrodes 21X and the second transparent sensing electrodes 21Y adjacent to each other. Therefore, the first insulation patterns 161 are disposed between the decoration layer 14 and the first transparent sensing electrodes 21X and between the decoration layer 14 and the second transparent sensing electrodes 21Y respectively. Moreover, the first insulation patterns 161 at least partially overlap the decoration layer 14, the first transparent sensing electrodes 21X and the second transparent sensing electrodes 21Y respectively. That is to say, the first insulation patterns 161 are also disposed in the gaps s between the dummy electrodes 21D and the first transparent sensing electrodes 21X and between the dummy electrodes 21D and the second transparent sensing electrodes 21Y. Accordingly, when the first patterned transparent sensing layer 21 is being etched, none of the transparent conductive material remains even if the adhesion between the decoration layer 14 and the transparent conductive material is strong, which effectively prevents short circuit risk. In this embodiment, the first insulation patterns 161 may include a plurality of the first insulation patterns 161, which do not mutually connect to each other, but not limited thereto. In a variant embodiment, the first insulation pattern 161 is a ring-like insulation pattern and substantially surrounds the light transmissible region 12A.

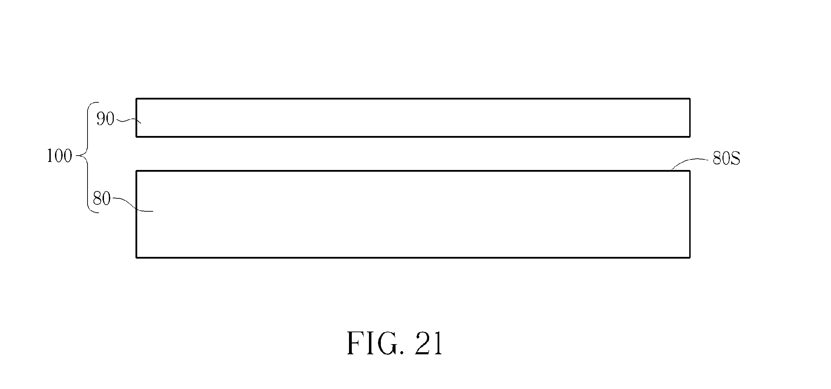

Please refer to FIG. 21. FIG. 21 is a schematic diagram illustrating a touch display panel according to an embodiment of the present invention. As shown in FIG. 21, the touch display panel 100 in this embodiment includes a display panel 80 and a touch panel 90. The display panel 80 has a display surface 80S; and the touch panel 90 is disposed on the display surface 80S of the display panel 80. The display panel 80 may include a liquid crystal display panel, an organic electroluminescent layer, an electrophoretic display panel, an electro-wetting display panel and any other kind of display panels. The touch panel 90 may be any one of the touch panels in the embodiments illustrated in FIGs. 1-20 of the present invention, and will not be redundantly described.

To sum up, in the touch panel and touch display panel of the present invention, an insulation pattern is disposed between the patterned transparent layer and the decoration layer, and thus no transparent conductive material remains after the transparent conductive material has been etched to form the first patterned transparent sensing layer 21 - therefore, the risk of a short circuit is reduced. Moreover, the insulation pattern can be formed of the same patterned insulation layer as the insulation pattern of the touch sensing device, and no extra mask is required.

## Claims

1. A touch panel (10), **characterized by**:
a substrate (12), wherein the substrate (12) has a light transmissible region (12A) and a peripheral region (12B);
a decoration layer (14) disposed in the peripheral region (12B) of the substrate (12);
a touch sensing device (20) comprising a first patterned transparent sensing layer (21), wherein the first patterned transparent sensing layer (21) is at least disposed in the light transmissible region (12A) of the substrate (12), and the first patterned transparent sensing layer (21) extends to the peripheral region (12B) and overlaps a portion of the decoration layer (14); and
at least one first insulation pattern (161) disposed in the peripheral region (12B) of the substrate (12) and interposed between the first patterned transparent sensing layer (21) and the decoration layer (14), thereby making the first patterned transparent sensing layer (21) not contact the decoration layer (14).

2. The touch panel (10) according to claim 1, **characterized in that** a material of the decoration layer (14) comprises at least one of ceramic, diamond-like carbon, ink or organic materials.

3. The touch panel (10) according to claim 1, **characterized in that** the touch sensing device (20) further comprises a plurality of second insulation patterns (162) and a plurality of second connection lines (23C), wherein
the first patterned transparent sensing layer (21) comprises:
a plurality of first transparent sensing electrodes (21X) and a plurality of first transparent connection lines (21C), wherein any two of the first transparent sensing electrodes (21X) adjacent to each other are connected by the first transparent connection line (21C), at least one of the first transparent sensing electrodes (21X) partially overlaps the decoration layer (14), and the first insulation pattern (161) is disposed between the first transparent sensing electrodes (21X) and the decoration layer (14);
a plurality of second transparent sensing electrodes (21Y), wherein any two of the second transparent sensing electrodes (21Y) adjacent to each other are connected by the second connection line (23C) corresponding to the two of the second transparent sensing electrodes (21Y), at least one of the second transparent sensing electrodes (21Y) partially overlaps the decoration layer (14), and the first insulation pattern (161) is disposed between the second transparent sensing electrodes (21Y) and the decoration layer (14); and
each of the second insulation patterns (162) is disposed between the first transparent connection line (21C) and the second connection line (23C) corresponding to the first transparent connection line (21C), respectively.

4. The touch panel (10) according to claim 3, **characterized in that** each of the second insulation patterns (162) is disposed on the second connection line (23C) corresponding to the second insulation pattern (162), and the first patterned transparent sensing layer (21) is disposed on the second insulation patterns (162).

5. The touch panel (10) according to claim 4, **characterized in that** the second insulation patterns (162) and the first insulation patterns (161) are formed of the same patterned insulation layer.

6. The touch panel (10) according to claim 3, **characterized in that** each of the second insulation patterns (162) is disposed on the first patterned transparent sensing layer (21), each of the second connection lines (23C) is disposed on the second insulation pattern (162) corresponding to the second connection line (23C), and the second insulation patterns (162) and the first insulation patterns (161) are formed of different patterned insulation layers.

7. The touch panel (10) according to claim 1, **characterized in that** the touch sensing device (20) further comprises a second patterned transparent layer (22), wherein
the first patterned transparent sensing layer (21) comprises a plurality of first transparent sensing electrodes (21X) and a plurality of first transparent connection lines (21C), wherein any two of the first transparent sensing electrodes (21X) adjacent to each other are connected by the first transparent connection line (21C), at least one of the first transparent sensing electrodes (21X) partially overlaps the decoration layer (14), and the first insulation pattern (161) is disposed between the first transparent sensing electrodes (21X) and the decoration layer (14); and
the second patterned transparent layer (22) comprises a plurality of second transparent sensing electrodes (21Y) and a plurality of second transparent connection lines (22C), wherein any two of the second transparent sensing electrodes (21Y) adjacent to each other are connected by the second transparent connection line (22C).

8. The touch panel (10) according to claim 7, **characterized in that** the first patterned transparent sensing layer (21) and the second patterned transparent layer (22) are disposed on the same surface of the substrate (12), the first patterned transparent sensing layer (21) is disposed on the second patterned transparent layer (22), the touch sensing device (20) further comprises a second insulation pattern (162) disposed in the light transmissible region (12A) and interposed between the first patterned transparent sensing layer (21) and the second patterned transparent layer (22), the first insulation pattern (161) is disposed between the first transparent sensing electrodes (21X) and the decoration layer (14), and the second insulation patterns (162) and the first insulation pattern (161) are formed of the same insulation layer.

9. The touch panel (10) according to claim 8, **characterized in that** at least one of the second transparent sensing electrodes (21Y) partially overlays the decoration layer (14), and the touch panel further comprises at least one third insulation pattern (163) disposed in the peripheral region (12B) and interposed between the second transparent sensing electrodes (21Y) and the decoration layer (14).

10. A touch panel (200), **characterized by**:
a substrate (12), wherein the substrate (12) has a light transmissible region (12A) and a peripheral region (12B);
a decoration layer (14) disposed in the peripheral region (12B) of the substrate (12);
a touch sensing device (20), wherein the touch sensing device (20) comprises a plurality of transparent sensing electrodes, a portion of the transparent sensing electrodes are disposed in the light transmissible region (12A) of the substrate (12), another portion of the transparent sensing electrodes are disposed on and partially overlap the decoration layer (14), there are gaps (g) in the peripheral region (12B) and each of the gaps (g) exits between two adjacent transparent sensing electrodes; and
at least one first insulation pattern (161) disposed in the peripheral region (12B) of the substrate (12), wherein a portion of the first insulation pattern (161) is disposed in one of the gaps (g) and another portion of the first insulation pattern (161) is disposed between the decoration layer (14) and the transparent sensing electrodes respectively and partially overlaps the decoration layer (14) and the transparent sensing electrodes.

11. The touch panel (200) according to claim 10, **characterized in that** the at least one first insulation pattern (161) comprises a plurality of the first insulation patterns (161), the first insulation patterns (161) do not mutually connect to each other, a portion of each of the first insulation patterns (161) is disposed in one of the gaps (g), and another portion of each of the first insulation patterns (161) at least partially overlaps the decoration layer (14) and the transparent sensing electrodes respectively.

12. The touch panel (200) according to claim 10, **characterized in that** the at least one first insulation pattern (161) is a ringlike insulation pattern and substantially surrounds the light transmissible region (12A), a portion of the first insulation pattern (161) is disposed in the gaps (g), and another potion of the first insulation pattern (161) overlaps the decoration layer (14) and the transparent sensing electrodes respectively.

13. The touch panel (200) according to claim 10, **characterized in that** the touch sensing device (20) further comprises forming a plurality of the second insulation patterns (162), a plurality of first transparent connection lines (21C) and a plurality of second connection lines (23C), the transparent sensing electrodes comprise a plurality of first transparent sensing electrodes (21X) and a plurality of second transparent sensing electrodes (21Y), any two of the first transparent sensing electrodes (21X) adjacent to each other are connected by the first transparent connection line (21C), any two of the second transparent sensing electrodes (21Y) adjacent to each other are connected by the second connection line (23C), and each of the second insulation patterns (162) is disposed between the first transparent connection line (21C) and the second connection line (23C) corresponding to the first transparent connection line (21C) respectively.

14. The touch panel (200) according to claim 13, **characterized in that** the first transparent sensing electrodes (21X), the second transparent sensing electrodes (21Y) and the first transparent connection lines (21C) are all formed of a first patterned transparent sensing layer (21), and each of the second connection lines (23C) comprises a metal connection line or a transparent connection line.

15. The touch panel (200) according to claim 14, **characterized in that** the first patterned transparent sensing layer (21) further comprises a dummy electrode (21D) disposed in the gap (g) between the first transparent sensing electrode (21X) and the second transparent sensing electrode (21Y) adjacent to the first transparent sensing electrode (21X).
